# EUROPÄISCHE PATENTSCHRIFT

(11) **EP 2 484 537 B1**
(45) Veröffentlichungstag und Bekanntmachung des Hinweises auf die Patenterteilung: **06.04.2016**
(21) Anmeldenummer: 12000604.4
(22) Anmeldetag: 31.01.2012
(51) Int. Cl.: B42D 15/00, G02B 5/23, G03C 5/08, G09F 3/00, B42D 25/29, B42D 25/342, B42D 25/355

(54) **Authentizitätssicherung von Wertdokumenten mittels photochromer Farbstoffe**
Authentication of security documents by means of photochromic dyes
Authentification de documents de valeur à l'aide de colorants photochromes

(30) Priorität: 02.02.2011 DE 102011010127
(43) Veröffentlichungstag der Anmeldung: 08.08.2012
(73) Patentinhaber: Giesecke&Devrient, 81677 München (DE)
(72) Erfinder: Liebler, Ralf, Dr., 83727 Schliersee (DE)

(56) Entgegenhaltungen:
- EP-A1- 1 404 526
- EP-A1- 2 042 342
- WO-A1-2006/103238

## Beschreibung

Die vorliegende Erfindung betrifft Wertdokument-Substrate zur Herstellung von Wertdokumenten, insbesondere von Banknoten, mit mindestens einem photochromen Sicherheitsmerkmal sowie Wertdokumente, insbesondere Banknoten, die unter Verwendung des Wertdokument-Substrats erhältlich sind.

Wertdokumente im Sinne dieser Erfindung sind Banknoten, Urkunden, Scheckformulare, Aktien, Etiketten zur Produktsicherung und allgemein fälschungsgefährdete Gegenstände jeglicher Art, insbesondere jedoch Banknoten. Wertdokument-Substrate stellen Vorstufen bei der Herstellung der eigentlichen Wertdokumente dar, d.h. sie weisen bereits das photochrome Sicherheitsmerkmal auf, befinden sich jedoch noch nicht in umlauffähiger Form. Sie können insbesondere in Form von Bögen oder Endlosbändern vorliegen und mit weiteren Sicherheitsmerkmalen, Druckschichten, Folienschichten, etc. ausgestattet werden. Photochrome Sicherheitsmerkmale sind Sicherheitsmerkmale, die mindestens einen photochromen Farbstoff enthalten.

Wertdokumente müssen gegen Fälschung geschützt werden. Dies geschieht mittels möglichst fälschungssicherer Sicherheitsmerkmale. Ein "fälschungssicheres" Sicherheitsmerkmal muss untrennbar mit dem zu schützenden Gegenstand verbunden sein, objektiv verifizierbar sein und möglichst auch durch Laien ortsunabhängig überprüfbar sein. Insbesondere muss das Merkmal auch unkopierbar sein. Gängige Sicherheitsmerkmale sind Hologramme, lumineszierende Darstellungen, Metallisierungen und andere Merkmale, die visuell oder maschinell nachweisbar sind. Die Sicherheitsmerkmale erlauben es einem geübten Betrachter, gegebenenfalls unter Zuhilfenahme geeigneter Überprüfungsgeräte, gefälschte Dokumente weitgehend zuverlässig von echten Dokumenten zu unterscheiden. Bei flüchtiger Betrachtung oder wenn die speziellen Sicherheitsmerkmale eines Wertdokuments dem Betrachter nicht genau bekannt sind, wie das beispielsweise bei Banknoten im normalen Zahlungsverkehr oder bei Fremdwährung typischerweise der Fall ist, können Fälschungen leicht unerkannt bleiben. Ein besonderes Problem stellen die modernen Farbkopierer dar, die Wertdokumente wie beispielsweise Banknoten in erstaunlicher Qualität kopieren. Die Kopierer weisen zwar systeminterne Sicherungen auf, die ein Kopieren von Banknoten verhindern sollen, aber diese Sicherungen können umgangen werden.

Daher wurde versucht, Wertdokumente mit Sicherheitsmerkmalen auszustatten, die nicht kopierbar sind. Derartige Sicherheitsmerkmale sind beispielsweise Merkmale mit Farbkippeffekt und mikrooptische Strukturen wie Moiré-Muster. Derartige Merkmale sind zwar nicht kopierbar und schwer zu fälschen, aber von einem ahnungslosen Betrachter wie beispielsweise einem Benutzer einer Fremdwährung sind möglicherweise auch schlechte Fälschungen nicht erkennbar.

Ein nicht kopierbares Sicherheitsmerkmal, dessen Vorhandensein oder Nicht-Vorhandensein auch von einem unbedarften Betrachter sofort erkennbar ist, ist eine durchgehende Öffnung in einem Wertdokument, die mit einem transparenten Material verschlossen ist. Wird ein derartiges Wertdokument kopiert, erscheint der transparente Bereich in der Kopie in der Farbe des Hintergrunds. Um ein gefälschtes Wertdokument mit einem transparenten Bereich zu erhalten, muss ein Fälscher den betreffenden Bereich ausschneiden und neu mit einem transparenten Material verschließen.

Nicht kopierbar sind auch sogenannte "photochrome" Sicherheitsmerkmale. Unter Photochromie versteht man eine durch Licht hervorgerufene reversible Zustandsänderung eines Stoffes, insbesondere eine Farbänderung. Die von einem Betrachter wahrgenommene Farbe eines Stoffes ist durch sein Absorptionsspektrum bedingt. Wahrgenommen wird jeweils die Komplementärfarbe der absorbierten Lichtfarbe. Ausgangsprodukt und Endprodukt einer photochromen Zustandsänderung haben unterschiedliche Absorptionsspektren. Die Rückreaktion (thermische Relaxation) kann spontan innerhalb sehr kurzer Zeit erfolgen oder durch Licht anderer Wellenlänge oder durch Erwärmen ausgelöst werden.

Es sind zahlreiche photochrome Substanzen bekannt, sowohl anorganische als auch organische. Die reversiblen Umwandlungen zwischen den Zuständen werden durch Licht in unterschiedlichen Wellenlängenbereichen ausgelöst. Beispielsweise färbt sich das orangefarbene Triphenylfulgid bei Belichtung mit kurzwelligem Licht bläulich, und durch Bestrahlung mit rotem Licht stellt sich wieder die orange Farbe ein. Farblose Spiropyrane gehen bei UV-Belichtung in einen blauen Zustand über, der durch Bestrahlung mit sichtbarem Licht wieder zu dem farblosen Zustand zurückreagiert. Außerdem gibt es Photochromie beispielsweise bei Acetaniliden, Stilben-, Rhodamin- und Antrachinon-Derivaten, bei Benzofuroxanen und vielen anderen Verbindungen. Ein natürliches photochromes System ist das des Phytochroms. Die reversibel ineinander umwandelbaren Zustände weisen unterschiedliche Lebensdauern auf. Zur Herstellung visueller Merkmale sind photochrome Substanzen mit eher kurzlebigen Zuständen geeignet, während zur Datenspeicherung sehr langlebige Zustände benötigt werden.

Sehr gut geeignet, und bereits zur Herstellung von Sicherheitsmerkmalen benutzt, ist das Protein Bacteriorhodopsin. Es wird von Halobacterium salinarum in einem bestimmten Bereich der Zellmembran, der Purpurmembran, gebildet und ist das Schlüsselprotein der halobakteriellen Photosynthese. Für ein Protein ist Bacteriorhodopsin (BR) chemisch, photochemisch und thermisch sehr stabil. Auch Proteorhodopsin wurde bereits für Sicherheitsmerkmale verwendet.

Das Chromophor des BR hat ein Absorptionsmaximum bei etwa 570 nm, so dass ein Betrachter eine violette Farbe wahrnimmt. Die Absorption von Photonen führt zu chemischen und strukturellen Veränderungen, wobei die entsprechenden Zustände spektroskopisch unterscheidbar sind. BR vom Wildtyp wird durch Bestrahlung mit 570 nm in den M-Zustand geschaltet, der eine gelb-grüne Farbe aufweist. In wässriger Suspension weist der M-Zustand eine Lebensdauer von nur etwa 10 ms auf, aber durch Kühlung oder Dehydratisierung kann der M-Zustand stabilisiert werden. Der M-Zustand von BR vom Wildtyp hat dann eine Lebensdauer im Minutenbereich, danach erfolgt Relaxation in den Ausgangszustand (B-Zustand). Die Rückreaktion kann thermisch oder durch Bestrahlung mit Licht mit einer Wellenlänge von etwa 410 nm beschleunigt werden.

BR ist in Reinform erhältlich, wird aber bevorzugt in der Purpurmembran-Form eingesetzt. Purpurmembranen sind Lipiddoppelschichten, in die BR in einer zweidimensionalen Anordnung eingelagert ist. Aus der Purpurmembran herausgelöstes BR ist sehr viel weniger stabil als die gebundene Form.

Bacteriorhodopsin ist ein sehr vielseitiges Protein, das eine Reihe von Vorteilen aufweist, die es zur Herstellung von Sicherheitsmerkmalen geeignet macht. Die Vorteile des BR sind grundsätzlich bekannt, und die bekannten Vorteile und Variationsmöglichkeiten des BR werden auch bei der vorliegenden Erfindung genutzt.

EP 1404 526 offenbart die Verwendung von BR zur Dokumentensicherung, wobei BR in die Papiermasse der Wertdokumente eingebettet wird.

WO 94/05008 offenbart Anwendungen von BR auf dem Gebiet der Speichermedien. Aus dieser Druckschrift ist beispielsweise bekannt, dass BR durch Dehydratisieren stabilisiert werden kann und dass es durch pH-Werte von kleiner als 3 oder durch Entzug von zweiwertigen Kationen in eine blaue Form umgewandelt werden kann. Diese "Blue Membrane" ist photochemisch aktiv und in eine rosafarbene Form, die "Pink Membrane", umwandelbar, die durch Bestrahlung mit Licht wieder in die blaue Form zurückgeführt werden kann. Die Reversibilität, d.h. die Anzahl möglicher Umschaltzyklen, ist allerdings relativ niedrig.

Es werden auch Quellen für BR-Varianten und geeignete Herstellungsverfahren genannt.

WO 02/10207 offenbart photochrome Zusammensetzungen und ihre Anwendung zur Dokumentensicherung, insbesondere Zusammensetzungen mit verschiedenen Mutationen von BR. Es wird auch offenbart, wie Farben und Farbumschläge sowie die Hell- und Dunkeladaption von BR durch Mutationen beeinflusst werden kann.

EP 1171 309 offenbart photochrome BR-Zusammensetzungen zur Anwendung im Bereich Sicherheitstechnik, wobei insbesondere Funktionsvarianten, Sequenzvarianten, Derivatisierungsvarianten, Chromophorvarianten, Isotopenvarianten und Spin-Label-Varianten offenbart werden. Offenbart werden auch Zusammensetzungen wie Drucktinten mit Bacteriorhodopsin und geeignete Auftragungsverfahren.

So vorteilhaft Bacteriorhodopsin für sicherheitstechnische Anwendungen auch erscheinen mag, ist es doch auch mit einigen Nachteilen behaftet. Ein wesentlicher Nachteil besteht darin, dass das Material, seine Eigenschaften und Modifizierungsmöglichkeiten allgemein bekannt und auch von jedem potentiellen Fälscher leicht in Erfahrung zu bringen sind. Auch die Herstellung und Anwendung geeigneter BR-Zusammensetzungen ist beschrieben und weist keine besonderen Schwierigkeiten auf. Überdies sind für sicherheitstechnische Anwendungen geeignete BR-Zusammensetzungen frei auf dem Markt erhältlich, beispielsweise von Actilor.

Ein weiteres Problem besteht darin, dass BR zwar für ein Protein erstaunlich stabil ist, aber nicht immer stabil genug für extreme Beanspruchungen, wie sie beim Gebrauch mancher Wertdokumente auftreten. Banknoten beispielsweise werden im Laufe ihrer langen Umlaufdauer sehr starken mechanischen und chemischen Beanspruchungen durch Knittern, Temperaturwechsel, Kontakte mit Fetten, sauren und basischen Substanzen, Feuchtigkeit, Hitze und sonstigen Umwelteinflüssen ausgesetzt. Durch derartige Beanspruchungen wird Bacteriorhodopsin im Laufe der Zeit verändert, so dass sich auch die Eigenschaften des Sicherheitsmerkmals, das Bacteriorhodopsin aufweist, im Laufe der Zeit verändern. Beispielsweise können sich bei Sicherheitsmerkmalen, die mehrere BR-Mutanten enthalten, die Merigenverhältnisse der Mutanten verändern. Dies liegt daran, dass verschiedene Mutanten auch verschieden auf Veränderungen ihrer Umgebung, beispielsweise des pH-Werts, reagieren. Da die verschiedenen Mutanten auch verschiedene Eigenschaften aufweisen, beispielsweise verschiedene Absorptionsmaxima und/oder verschiedene Lebensdauern ihrer ineinander umschaltbaren Zustände, verändern sich dadurch zwangsweise die spektroskopischen Eigenschaften des Sicherheitsmerkmals.

Das Dokument WO 2006/103238 offenbart ein Wertdokument-Substrat nach der oberteil des Anspruchs 1.

Aufgabe der vorliegenden Erfindung ist es daher, die Nachteile des Stands der Technik zu vermeiden und ein Wertdokument bzw. ein Wertdokument-Substrat mit mindestens einem Sicherheitsmerkmal auf der Basis eines photochromen Farbstoffs bereitzustellen, das eine hohe Sicherheit gegen Fälschung bietet und gegen mechanische Belastungen und Umweltbelastungen beständig ist.

Aufgabe der vorliegenden Erfindung ist es insbesondere, Banknoten bzw. Banknoten-Substrate bereitzustellen, die mindestens ein Sicherheitsmerkmal mit einem photochromen Farbstoff aufweisen, das die hohen Anforderungen an Fälschungssicherheit und mechanische und chemische Belastbarkeit, die an Sicherheitsmerkmale einer Banknote gestellt werden, erfüllt.

Die Aufgabe wird gelöst durch das Wertdokument-Substrat mit den Merkmalen, wie sie in den unabhängigen Ansprüchen 1, 2 und 3 angegeben sind, und durch das Wertdokument mit den Merkmalen, wie sie im unabhängigen Anspruch 14 angegeben sind. Vorteilhafte Ausgestaltungen der vorliegenden Erfindung sind in den abhängigen Ansprüchen angegeben.

Erfindungsgemäß wird das Sicherheitsmerkmal mit dem photochromen Farbstoff in dem Wertdokument-Substrat so eingeschlossen, dass es einerseits geschützt und andererseits untrennbar mit dem Wertdokument verbunden ist. Gemäß bevorzugten Ausführungsformen werden zusätzlich zu der photochromen Substanz ein oder mehrere zusätzliche Merkmale vorgesehen, die zusammen mit der photochromen Substanz ein Kombinationsmerkmal bilden. Gemäß einer ganz besonders bevorzugten Ausführungsform wird das Sicherheitsmerkmal mit der photochromen Substanz innerhalb einer durchgehenden Öffnung in dem Wertdokument-Substrat, insbesondere einem Banknoten-Substrat, geschützt und untrennbar mit dem Wertdokument-Substrat verbunden vorgesehen.

Im folgenden wird die Erfindung anhand eines "Wertdokuments" erläutert. Es versteht sich, dass die Ausführungen ganz allgemein für Wertdokument-Substrate, also noch nicht umlauffähige Formen der Wertdokumente, und ganz besonders für Banknoten und Banknoten-Substrate, gelten. Außerdem wird die vorliegende Erfindung anhand von Bacteriorhodopsin (BR) als photochrome Substanz (photochromer Farbstoff) erläutert. Es versteht sich jedoch, dass die Erfindung analog für andere photochrome Farbstoffe gilt, wobei organische photochrome Farbstoffe, insbesondere natürliche photochrome Farbstoffe und Derivate und Varianten davon, bevorzugt sind.

Wertdokumente bestehen aus einer Schicht oder aus mehreren Schichten aus Papier oder Kunststoff oder Papier/Kunststoff-Gemischen. Erfindungsgemäße Wertdokumente weisen mindestens zwei Schichten auf, und das Bacteriorhodopsin (BR) enthaltende Sicherheitsmerkmal ist zwischen den zwei Schichten eingeschlossen, d.h. vollständig von den Schichten umgeben und durch sie geschützt.

Weist das erfindungsgemäße Wertdokument nur zwei Schichten auf, sind diese Schichten transparente Kunststofffolien, die miteinander verklebt oder laminiert sind, und gleich oder verschieden sein können. Das Sicherheitsmerkmal mit BR (oder einer anderen photochromen Substanz) wird durch den Doppelfolienaufbau beidseitig vor mechanischen und chemischen Angriffen geschützt.

Erfindungsgemäße Wertdokumente mit mehr als zwei Schichten weisen eine Kemschicht und zwei Deckschichten auf. Die Kernschicht besteht aus Papier oder Kunststoff oder Gemischen davon, und die Deckschichten sind Kunststofffolien. Die beiden Deckschichten können aus gleichen oder verschiedenen Materialien bestehen und die beiden Oberflächen der Kernschicht jeweils vollflächig oder nur teilflächig bedecken. Sie sind mit der Kernschicht verklebt oder, bei einer Kunststoff-Kernschicht, gegebenenfalls auch durch Laminieren mit der Kernschicht verbunden. Das Sicherheitsmerkmal mit BR befindet sich in diesem Fall zwischen der Kernschicht und einer der Deckschichten und wird von diesen Schichten vollständig bedeckt und zwischen ihnen eingeschlossen.

Bevorzugt sind Wertdokument-Ausführungsformen, bei denen die Kernschicht eine durchgehende Öffnung aufweist und sich das Sicherheitsmerkmal mit BR vollständig oder zumindest teilweise in der durchgehenden Öffnung befindet. Auch bei dieser bevorzugten Ausführungsform können die beiden Deckschichten die beiden Oberflächen der Kernschicht jeweils vollflächig oder teilflächig bedecken, müssen aber zumindest die durchgehende Öffnung in der Kernschicht vollständig abdecken und so verschließen, dass das Sicherheitsmerkmal mit BR vor mechanischen und chemischen Angriffen geschützt ist.

Ein besonderer Vorteil der Anordnung eines Sicherheitsmerkmals in einer durchgehenden Öffnung besteht darin, dass auch Sicherheitsmerkmale einer größeren Dicke gut untergebracht werden können, ohne dass es zu Verdickungsstellen an dem Wertdokument kommt. Dadurch sind hohe Auftragsmengen an BR (oder einer anderen photochromen Substanz) möglich, wodurch sehr gute Kontrastwerte erzielt werden können. Ein weiterer besonderer Vorteil besteht darin, dass in Kombination mit der Transparenz der durchgehenden Öffnung besonders interessante Effekte erzielbar sind.

Die Kernschicht kann einlagig oder mehrlagig sein und besteht meist aus Papier, wobei es hinsichtlich der Art des Papiers keine speziellen Beschränkungen gibt. Banknotenpapiere werden insbesondere aus Baumwollfasern oder Zellstofffasern hergestellt, aber es können auch Papiere verwendet werden, die zumindest teilweise aus Kunststofffasern bestehen, vorzugsweise aus Polyamidfasern oder Polyesterfasern. Das Flächengewicht der Kernschicht liegt typischerweise im Bereich von 50 g/m² bis 100 g/m², aber auch andere Flächengewichte sind möglich.

Für Kernschichten aus Kunststoff können beispielsweise Materialien wie Polyester und Polyolefine verwendet werden, aber auch andere Kunststoffmaterialien, beispielsweise Folien aus PMMA, Polyamid, oder Polycarbonat.

Die Deckschichten müssen zumindest in dem Bereich, in dem sie das Sicherheitsmerkmal bedecken, transparent oder zumindest transluzent sein, um eine gute Sichtbarkeit des Sicherheitsmerkmals zu gewährleisten. Unter transparent ist eine Lichtdurchlässigkeit von mindestens 90% des auftreffenden Lichts zu verstehen, unter transluzent eine Lichtdurchlässigkeit von unter 90%, vorzugsweise von mehr als 50%. Die Deckschichten, bzw. die beiden einzigen Schichten, sind Kunststofffolien, wobei die Folien gleich oder verschieden sein können. Geeignet sind beispielsweise Folien aus Polyester, wie Polyethylenterephthalat, Polypropylen, Polyethylen, Polyamid und Polycarbonat. Bevorzugte Deckschichtfolien-Dicken liegen im Bereich von 1 µm bis 20 µm, und bei Wertdokumenten ohne Kernschicht liegen die entsprechenden Foliendicken etwas höher, beispielsweise bei 20 bis 50 µm.

Die Wertdokumentschichten können miteinander laminiert werden, sofern die Schichtmaterialien ein Laminieren erlauben. Bacteriorhodopsin ist in trockener Form bei Temperaturen bis etwa 120°C stabil, wird also durch übliche Laminierungstemperaturen nicht beschädigt. Alternativ können die Schichten miteinander verklebt werden, was den zusätzlichen Vorteil hat, dass die Klebstoffe zur Einbringung weiterer Merkmalsstoffe, wie von Fluoreszenzfarbstoffen, genutzt werden können oder beispielsweise gefärbt werden können.

Die erfindungsgemäßen Wertdokumente sind beispielsweise Polymerbanknoten (Banknoten aus ausschließlich Kunststoffschichten), Hybridbanknoten (Banknoten mit einer Kernschicht aus Papier und zwei Kunststoff-Deckschichten, die die Kernschicht vollflächig bedecken) aber auch Sicherheitselemente wie Etiketten, Folienpatches oder Sicherheitsfäden. Die Wertdokumente können auch als Transferelemente ausgebildet sein. Kennzeichnend für Transferelemente ist, dass die Sicherheitselemente auf einer Trägerschicht mit einem Schichtaufbau in umgekehrter Schichtfolge, wie sie später auf dem zu schützenden Gegenstand vorliegen soll, vorbereitet werden. Die Trägerschicht wird nach dem Transfer entweder von dem Schichtaufbau des Sicherheitselements abgezogen oder verbleibt als Schutzschicht auf dem Sicherheitselement. Es wird darauf hingewiesen, dass die erfindungsgemäßen Wertdokumente bzw. Wertdokument-Substrate außer den bisher genannten Schichten und dem photochromen Sicherheitsmerkmal weitere Schichten und Sicherheitsmerkmale aufweisen können.

Das photochrome Sicherheitsmerkmal der erfindungsgemäßen Wertdokumente weist mindestens einen photochromen Farbstoff auf. Grundsätzlich sind alle photochromen Farbstoffe geeignet, die zwei ausreichend stabile, reversibel ineinander umwandelbare Zustände haben, aber bevorzugt sind photochrome Farbstoffe aus Biomembranen phototropher Organismen, insbesondere retinalbasierte (Retinal als Chromophor) Pigmente wie Rhodopsine. Besonders bevorzugt sind Bacteriorhodopsin (BR), Proteorhodopsin und Xanthorhodopsin, wobei Bacteriorhodopsin am meisten bevorzugt ist.

Für die erfindungsgemäßen Zwecke geeignet sind alle photochromen Farbstoffe, z.B. BR-Varianten, mit mindestens zwei thermisch stabilen Zuständen, die eine hohe Anzahl von Schaltvorgängen, d.h. Übergängen zwischen den stabilen Zuständen, erlauben, bevorzugt mehrere 10.000 Schaltvorgänge, insbesondere bevorzugt mehrere 100.000 Schaltvorgänge. Bevorzugt sind photochrome Farbstoffe, z.B. BR-Varianten, deren stabile Zustände farblich deutlich voneinander unterscheidbar sind; deren Umwandlung ineinander mit Hilfe von sichtbarem Licht, beispielsweise mittels normaler Taschenlampen oder Schreibtischlampen, herbeigeführt werden kann; die eine hohe Lichtempfindlichkeit aufweisen; und die eine hohe Temperaturstabilität aufweisen.

Thermisch stabil ist ein Zustand, wenn er ausreichend lange stabil ist, dass die Farbänderung visuell oder maschinell deutlich wahrgenommen werden kann. Dies ist bei einer Dauer von etwa ab einer Sekunde der Fall. Sollen die Sicherheitsmerkmale einer Datenspeicherung dienen, beispielsweise als Kodierung zur Kennzeichnung eines Herstellers oder einer bestimmten Produktcharge, sind thermische Stabilitäten der Zustände über viele Jahre hinweg erforderlich. Bei der vorliegenden Erfindung dient der photochrome Farbstoff wie das Bacteriorhodopsin jedoch weniger der Datenspeicherung, sondern es sollen vielmehr optische Effekte visuell oder auch maschinell erkannt werden.

Nicht zwingend erforderlich ist es, dass die photochromen Farbstoffe unter dem Gesichtspunkt einer besonders hohen Stabilität gegenüber Umwelteinflüssen wie Feuchtigkeit oder pH-Änderungen, ausgewählt werden, da sie derartigen Einflüssen nicht ausgesetzt werden.

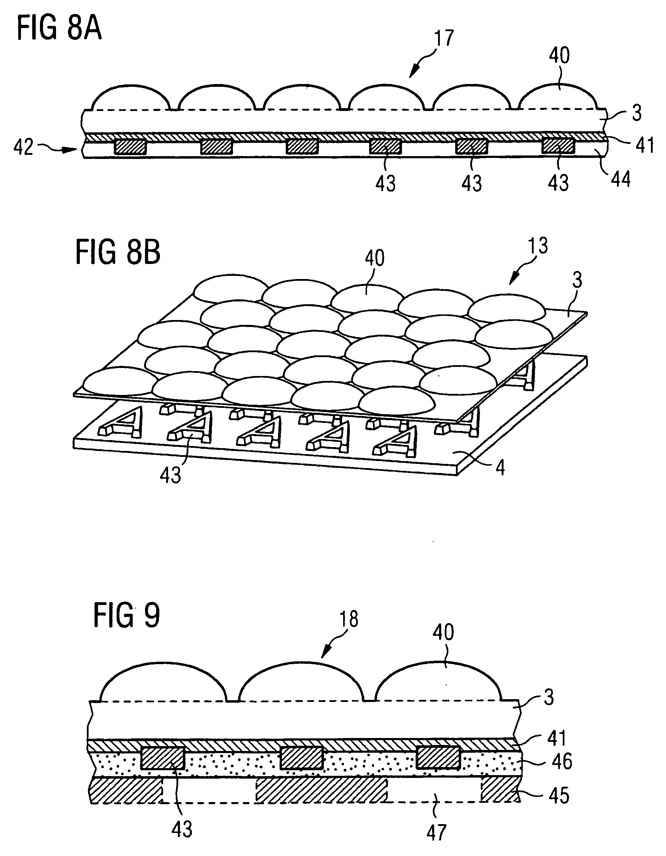

Für die erfindungsgemäßen photochromen Sicherheitsmerkmale geeignete photochrome Substanzen sind bekannt. Bevorzugt sind die retinalbasierten Photochrome, und insbesondere bevorzugt die Rhodopsine Bacteriorhodopsin und Proteorhodopsin und ihre Varianten. Hinsichtlich Bacteriorhodopsinen wird verwiesen auf die eingangs genannten Druckschriften EP 1 404 526 B1, EP 1 171309 B1, WO 94/05008 und WO 02/10207. Wegen der gegenüber der freien Form erhöhten Stabilität werden die Bacteriorhodopsine bevorzugt in der Purpurmembran-Form eingesetzt, beispielsweise dispergiert in Wasser oder in einem Lösungsmittel auf Alkoholbasis in Form von Druckfarben oder anderen Farbzusammensetzungen. Die Farbzusammensetzungen können mittels üblicher Verfahren aufgetragen werden, beispielsweise aufgedruckt werden, wie im Offset-, Sieb- oder Inkjet-Druckverfahren. Auch sonstige Verfahren wie beispielsweise Aufsprühen oder Tauchen oder das später erläuterte Mikrotiefdruckverfahren (Fig. 8, 9) sind möglich. Die Auftragung erfolgt bevorzugt in strukturierter Form, beispielsweise in Form eines Musters oder eines Codes. Die Zusammensetzungen können übliche Hilfsstoffe enthalten, beispielsweise Netzmittel, Verlaufsmittel, Lichtstabilisatoren, UV-Absorber, Antioxidantien, Schaumverhinderer, etc. Geeignete Zusammensetzungen sind auf dem Markt erhältlich, beispielsweise von Actilor (Leuna, DE).

Zur Herstellung der erfindungsgemäßen Wertdokumente mit einem photochromen Sicherheitsmerkmal, beispielsweise auf BR-Basis, ist es möglich, nur eine photochrome Substanz, beispielsweise nur eine BR-Variante, mehrere verschiedene BR-Varianten, Gemische von BR und anderen photochromen Substanzen oder Gemische von BR mit anderen, nicht-photochromen Farbstoffen einzusetzen. Ebenso können Zusammensetzungen mit BR und Zusammensetzungen mit anderen photochromen oder nicht-photochromen Substanzen nebeneinander oder übereinander aufgetragen werden. Besonders bevorzugte BR-Varianten sind BR vom Wildtyp (dehydratisiert), D96N, D36C und D85N.

Erfindungsgemäße Wertdokumente bzw. Wertdokument-Substrate weisen bevorzugt Kombinations-Sicherheitsmerkmale auf, d.h. das eigentliche Sicherheitsmerkmal wird durch eine Kombination einer oder mehrerer photochromer Substanzen mit mindestens einem weiteren Merkmal gebildet. Als besonders vorteilhafte Kombinationen seien genannt:

Kombinationen von BR (oder anderer photochromer Substanzen) mit nicht-photochromen Farben (Fixfarben), wobei die nicht-photochrome Farbe bevorzugt dieselbe Farbe hat wie einer der thermisch stabilen Zustände des verwendeten photochromen Farbstoffs, bei Bacteriorhodopsin, beispielsweise Violett oder Gelb-Grün. Die photochrome und die nicht-photochrome Farbe können sich beispielsweise zu einem Muster ergänzen. Bei Bestrahlung mit Licht einer geeigneten Wellenlänge verändert sich das Muster, da die photochrome Farbe ihre Farbe verändert, die Fixfarbe jedoch nicht.

Kombinationen mit lichtabschirmenden Materialien wie beispielsweise opaken Aufdrucken oder Metallisierungen. Bei Bestrahlung mit Licht einer geeigneten Wellenlänge treten Farbwechsel der photochromen Farbe nur in dem nicht abgeschirmten Bereich auf, während die Farbe in dem abgeschirmten Bereich unverändert bleibt.

Kombinationen von photochromen Farben, Fixfarben und lichtabschirmenden Materialien, die die oben genannten Effekte in Kombination zeigen. Die photochromen Farben, Fixfarben und lichtabschirmenden Materialien können in unterschiedlichsten Kombinationen nebeneinander und/oder übereinander aufgetragen werden.

Kombinationen mit diffraktiven oder refraktiven Strukturen, beispielsweise Hologrammen. Dabei ergeben sich beispielsweise Hologramme mit photochromem Farbwechsel (photochrome Colorshift-Hologramme).

Kombinationen mit mikrooptischen Betrachtungselementen wie Mikrolinsen oder Mikrohohlspiegeln. Man erhält dabei mikrooptische Sicherheitsmerkmale wie Moire- oder Modulo-Vergrößerungsanordnungen mit Mikromotivelementen aus photochromen Farben oder Kombinationen von photochromen Farben und Fixfarben.

Kombinationen mit gefärbten, gegebenenfalls strukturiert (musterförmig) gefärbten, Folien. Hierbei wird ausgenutzt, dass bestimmte thermisch stabile Zustände von BR, beispielsweise der M-Zustand, durch Bestrahlung mit Licht einer geeigneten Wellenlänge, beispielsweise 410 nm, in den Ausgangszustand zurückgeschaltet werden können. Ein Sicherheitsmerkmal, das BR im B-Zustand aufweist und an einer Seite von einer blau gemusterten Folie bedeckt ist, wechselt bei Bestrahlung von der nicht mit blauer Folie bedeckten Seite her mit Licht einer Wellenlänge von etwa 570 nm seine Farbe von Violett zu gelblich-grün. Bei Bestrahlung von der entgegengesetzten Seite her, d.h. durch die blau gemusterte Folie hindurch, tritt ein Farbwechsel zurück zu Violett nur in den Bereichen auf, in denen das Bestrahlungslicht blaue Folienbereiche passierte. Analoges gilt für andere photochrome Farbstoffe.

Besonders bevorzugt sind Wertdokumente, die mikrooptische Sicherheitsmerkmale mit photochromen (z.B. BR-haltigen) Mikromotiven aufweisen. Derartige Sicherheitsmerkmale werden im Zusammenhang mit den Figuren 8 und 9 näher erläutert.

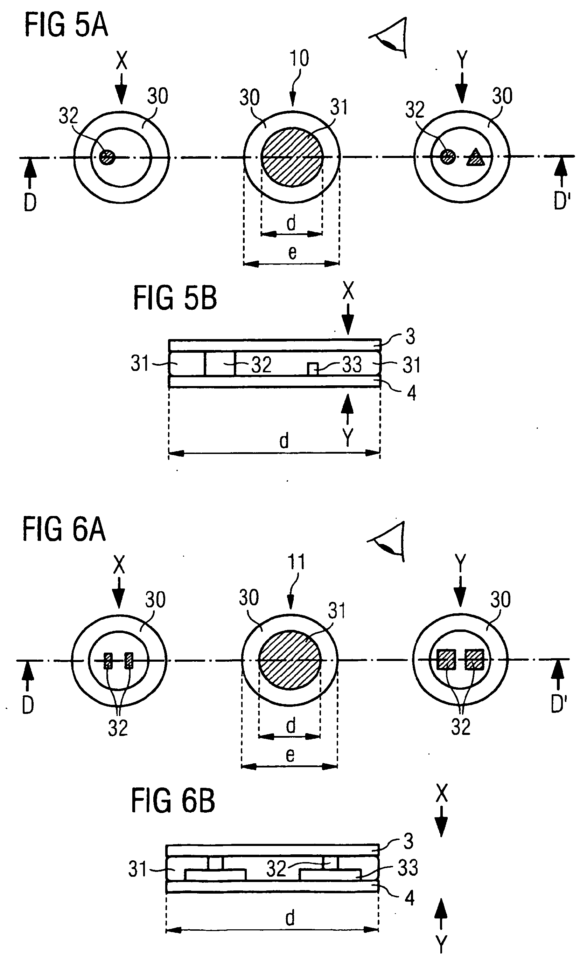

Besonders bevorzugt sind auch Wertdokumente, die Sicherheitsmerkmale aufweisen, bei denen photochrome Farbzusammensetzungen in Kombination mit Fixfarbe und/oder lichtabschirmenden Elementen verwendet werden. Derartige Sicherheitsmerkmale werden im Zusammenhang mit den Figuren 5, 6 und 7 näher erläutert.

Ganz besonders bevorzugt ist es, die Sicherheitsmerkmale in einer durchgehenden Öffnung einer Wertdokument-Schicht vorzusehen. Hier gibt es keine besonderen Beschränkungen hinsichtlich der Dicke des Sicherheitsmerkmals. Dies ist besonders wichtig bei Sicherheitsmerkmalen, bei denen mehrere Schichten übereinander erforderlich sind (Kombinationen von photochromen Farben, Fixfarben, lichtabschirmenden Elementen), und bei Volumenhologrammen und mikrooptischen Systemen. Diese weisen prinzipbedingt eine erhebliche Dicke auf, da zur Erzielung des optischen Effekts jeweils bestimmte Mindestschichtdicken erforderlich sind. Übliche Dicken liegen bei über 30 µm, typischerweise bei über 45 µm, und teilweise sind auch erhebliche Schichtdicken erforderlich, beispielsweise bis zu 100 µm.

Werden Wertdokumente wie Banknoten mit derartigen Sicherheitsmerkmalen ausgestattet, weisen sie Dickenunterschiede auf, die dazu führen, dass die Banknoten keine gute Planlage aufweisen, sondern zum Einrollen neigen und schwer gestapelt werden können. Eine durchgehende Öffnung in einer Wertdokument-Schicht bietet ausreichend Platz für derartige Sicherheitsmerkmale. Dabei kann das mikrooptische Sicherheitsmerkmal entweder vollständig in der durchgehenden Öffnung untergebracht werden oder "aufgeteilt" werden. Bei einem "aufgeteilten" mikrooptischen Sicherheitsmerkmal sind die Mikrolinsen oder sonstigen Vergrößerungselemente in einer Deckfolie vorgesehen, während sich die Mikrostrukturelemente, und gegebenenfalls weitere Sicherheitsmerkmal-Schichten, in der durchgehenden Öffnung befinden. Ein Aufteilen von Sicherheitsmerkmalen, d.h. ein Verteilen der Bestandteile eines Kombinations-Sicherheitsmerkmals auf mehrere Wertdokumentschichten, ist natürlich grundsätzlich auch ohne durchgehende Öffnung möglich. Beispielsweise können bei einem mikrooptischen Sicherheitsmerkmal die mikrooptischen Vergrößerungselemente in einer Deckfolie vorgesehen werden, während die Mikromotivelemente mit beispielsweise Bacteriorhodopsin auf die Kernschicht aufgedruckt sind.

Bei den erfindungsgemäßen Wertdokumenten ist es auch insofern besonders bevorzugt, das photochrome Sicherheitsmerkmal in einer durchgehenden Öffnung einer Wertdokumentschicht vorzusehen, als das Sicherheitsmerkmal auf diese Weise von beiden Seiten her mit Licht bestrahlt werden kann. Aufgrund der beidseitigen Bestrahlbarkeit sind besondere photochrome Effekte erzielbar, die im Zusammenhang mit den Figuren noch näher erläutert werden.

Die erfindungsgemäßen Wertdokument-Substrate werden bevorzugt zur Herstellung von Wertdokumenten wie Hybridbanknoten (Banknoten mit einer Kernschicht aus Papier und Deckschichten aus Kunststofffolie), Polymerbanknoten (Banknoten aus ausschließlich Kunststofffolien), Sicherheitsfäden, Etiketten, oder Folienpatches verwendet. Sie können auch als Transferelemente ausgebildet sein. Das besonders bevorzugte Anwendungsgebiet sind Banknoten.

Die Erfindung wird nachfolgend anhand von Figuren noch weiter veranschaulicht. Es wird darauf hingewiesen, dass die Figuren nicht maßstabsund nicht proportionsgetreu sind. Ferner sind die in einer Figur dargestellten Merkmale nicht nur in Kombination mit allen übrigen in der entsprechenden Figur dargestellten Merkmalen anwendbar. Vielmehr können im Zusammenhang mit einer speziellen Ausführungsform beschriebene Merkmale jeweils unabhängig mit Merkmalen aus anderen Ausführungsformen kombiniert werden, sofern technisch sinnvoll, bzw. ganz allgemein bei den erfindungsgemäßen photochromen Sicherheitsmerkmalen zur Anwendung kommen. Außerdem sind jeweils nur die zum Verständnis der geschilderten Effekte wesentlichen Merkmale bzw. Schichten dargestellt. Es versteht sich, dass zusätzliche Merkmale bzw. Schichten vorhanden sein können. Gleiche Bezugsziffern bezeichnen gleiche oder entsprechende Elemente. Es zeigen:
- Fig.1A: ein erfindungsgemäßes Wertdokument in Aufsicht,
- Fig.1B: einen Schnitt durch das Wertdokument von Fig.1A entlang der Linie A-A',
- Fig.1C: einen Schnitt durch das Wertdokument von Fig.1A entlang der Linie B-B',
- Fig. 2: einen Schnitt durch einen Teilbereich einer Ausführungsform eines erfindungsgemäßen Wertdokuments,
- Fig. 3: einen Schnitt durch einen Teilbereich einer alternativen Ausführungsform eines erfindungsgemäßen Wertdokuments,
- Fig. 4: einen Schnitt durch einen Teilbereich einer weiteren alternativen Ausführungsform eines erfindungsgemäßen Wertdokuments,
- Figuren 5 bis 7: Ausführungsformen erfindungsgemäßer Wertdokumente mit Kombinations-Sicherheitsmerkmal, wobei die Figuren 5A, 6A, 7A jeweils Ansichten in Aufsicht, und die Figuren 5B, 6B und 7B jeweils Ansichten im Schnitt sind,
- Fig. 8A: einen Schnitt durch ein mikrooptisches Sicherheitsmerkmal,
- Fig. 8B: eine Aufsicht auf eine Ausführungsform eines erfindungsgemäßen Wertdokuments mit einem mikrooptischen Sicherheitsmerkmal gemäß Figur 8A,
- Fig. 9: einen Schnitt durch ein alternatives mikrooptisches Sicherheitsmerkmal für ein erfindungsgemäßes Wertdokument, und
- Fig.10: einen Schnitt durch ein Sicherheitsmerkmal mit photochromem Colorshift-Hologramm für ein erfindungsgemäßes Wertdokument.

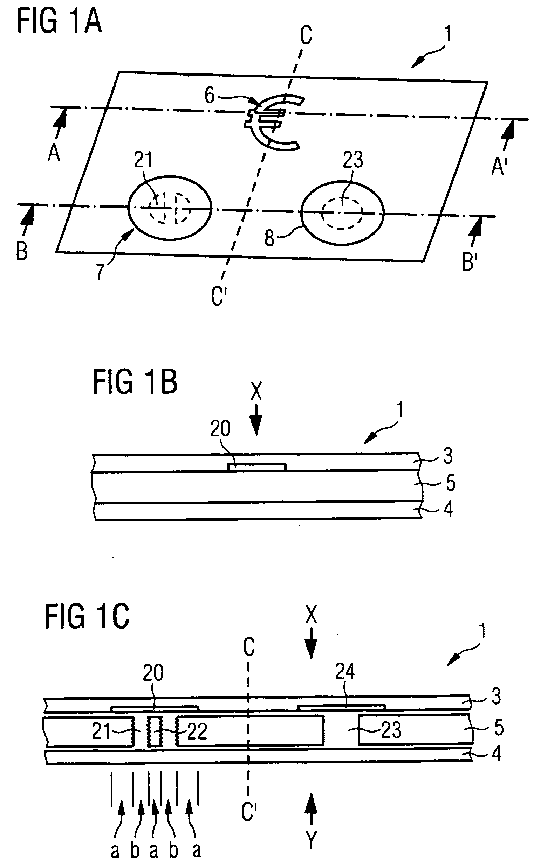

Fig.1A zeigt eine Aufsicht auf ein erfindungsgemäßes Wertdokument 1. Die Figuren 1B und 1C zeigen jeweils Schnitte durch dieses Wertdokument entlang den strichpunktierten Linien A-A' bzw. B-B'. Wie aus den Figuren 1B und 1C ersichtlich ist, besteht das Wertdokument 1 aus einer Kernschicht 5, beispielsweise aus Papier, die an ihrer ersten Oberfläche vollflächig mit einer ersten Deckschicht 3 bedeckt ist und an ihrer zweiten Oberfläche vollflächig mit einer zweiten Deckschicht 4 bedeckt ist. Die Deckschichten 3 und 4 bestehen aus transparenten Kunststofffolien, beispielsweise aus PET.

Das Wertdokument 1 weist ein erstes Sicherheitsmerkmal 6 und ein zweites Sicherheitsmerkmal 7 auf. Das erste Sicherheitsmerkmal 6 besteht in der dargestellten Ausführungsform aus einem Aufdruck 20 in Form des Euro-Symbols, wobei die Druckfarbe Bacteriorhodopsin (BR) enthält. Das Bacteriorhodopsin befindet sich unter Umgebungsbedingungen im B-Zustand, weshalb das Euro-Symbol einem Betrachter violett erscheint. Wie aus Figur 1B ersichtlich ist, ist das erste Sicherheitsmerkmal 6 auf eine Oberfläche der Kernschicht 5 aufgedruckt und vollständig zwischen der Deckschicht 5 und der ersten Deckschicht 3 eingeschlossen.

Das Wertdokument 1 weist außerdem ein zweites Sicherheitsmerkmal 7 auf, das aus einer Kombination aus einer durchgehenden Öffnung und einem photochromen Aufdruck besteht. Das zweite Sicherheitsmerkmal 7 ist in Fig. 1C im Schnitt dargestellt. Die Kernschicht 5 weist eine durchgehende Öffnung 21 mit einem Steg 22 auf. Die durchgehende Öffnung mit Steg ist in Fig. 1A gestrichelt dargestellt. Auf eine Oberfläche der ersten Deckschicht 3 ist ein Aufdruck 20 mittels einer photochromen Druckfarbe aufgedruckt. Die Druckfarbe enthält BR, und kann beispielsweise identisch mit der Druckfarbe zur Erzeugung des ersten Sicherheitsmerkmals 6 sein. Wie aus Fig. 1C ersichtlich ist, ist die erste Deckschicht 3 mit dem runden photochromen Aufdruck 20 so über der durchgehenden Öffnung 21 angeordnet, dass sich die Öffnung 21 mittig unter dem Aufdruck 20 befindet und der Aufdruck 20 vollständig zwischen der ersten Deckschicht 3, der Kernschicht 5 und der zweiten Deckschicht 4 eingeschlossen ist. In Fig. 1A ist der Umriss des Aufdrucks 20 als Kreislinie dargestellt, die die Öffnung 21 umgibt. Die gezackten Ränder der durchgehenden Öffnung 21 und des Stegs 22 in Fig.1C deuten an, dass es sich um Büttenränder handelt.

Wird das Wertdokument 1 mit Licht einer Wellenlänge von etwa 570 nm bestrahlt, beispielsweise mittels einer normalen Leuchtdioden-Taschenlampe, so wird der B-Zustand des BR in den M-Zustand umgeschaltet, und in den bestrahlten Bereichen wechselt die von einem Betrachter wahrgenommene Farbe von Violett nach Gelb-Grün. In den Figuren 1B und 1C, sowie in allen folgenden Figuren, geben die mit X und Y bezeichneten Pfeile jeweils die Richtung an, aus der das Wertdokument bestrahlt wird. Die Betrachtung erfolgt, wenn nichts anderes erwähnt wird, von der mit X bezeichneten Seite her. Diese Seite wird als die Oberseite des Wertdokuments bezeichnet.

Nach Bestrahlung der Oberseite des Wertdokuments 1 (aus der Richtung X) sieht der Betrachter also im Falle des ersten Sicherheitsmerkmals ein gelbgrünes Euro-Symbol, und im Falle des zweiten Sicherheitsmerkmals 7 eine runde, gelb-grüne Fläche. Im Falle des zweiten Sicherheitsmerkmals 7 gibt es, dank der durchgehenden Öffnung 21, außerdem die Möglichkeit der Bestrahlung der Unterseite (aus der Richtung Y) des Wertdokuments 1. Bei Bestrahlung der Unterseite, d.h. der zweiten Deckschicht 4, des Wertdokuments 1 wird das auf den photochromen Aufdruck 20 auftreffende Licht zum Teil durch den Steg 22 und zum Teil durch die Öffnung 21 umgebende Bereiche der Kernschicht 5 abgeschirmt. In diesen Bereichen, die in Fig. 1C mit a bezeichnet sind, tritt kein Farbwechsel auf. Ein Farbwechsel von Violett nach Gelb-Grün tritt lediglich in den mit b bezeichneten Bereichen auf, in denen das Bestrahlungslicht durch die Öffnung 21 hindurch auf die BR-Schicht 20 auftrifft. Ein Betrachter sieht nun (aus der Blickrichtung X) ein Violett/Gelb-Grün/Violett/Gelb-Grün/Violett-gestreiftes zweites Sicherheitsmerkmal 7.

Das Wertdokument 1 weist außerdem eine zweite durchgehende Öffnung 23 auf, über der sich ein blauer transparenter Aufdruck 24 befindet. Die Anordnung der zweiten durchgehenden Öffnung 23 und des transparenten Aufdrucks 24 entsprechen der Anordnung der ersten Öffnung 21 und des photochromen Aufdrucks 20. Die durchgehende Öffnung 23 und der blaue transparente Aufdruck 24 bilden zusammen das Rückschaltelement bzw. Verifikationselement 8. Dieses Verifikationselement 8 kann in unterschiedlicher Weise verwendet werden. Beispielsweise kann das Wertdokument 1 nach Bestrahlung und Umwandlung der bestrahlten Sicherheitsmerkmal-Bereiche in den gelb-grünen Zustand entlang der Knicklinie C-C' geknickt werden, so dass der transparente blaue Aufdruck 24 über dem chromophoren BR-Aufdruck 20 zu liegen kommt. Wird nun erneut mit der gleichen Lichtquelle bestrahlt, aber durch den blauen Filter 24 hindurch, so wird das Bacteriorhodopsin im M-Zustand umgehend in den B-Zustand zurückgeschaltet, und ein Betrachter sieht wieder eine gleichmäßig violett gefärbte Fläche 20. Dieser Zustand stellt sich auch ohne Bestrahlung durch den blauen Filter 24 hindurch wieder ein, jedoch erst nach einigen Minuten.

Ein blauer Filter wie der in Fig. 1C gezeigte Filter 24 kann auch zur Erzeugung von Mustern in photochromen Sicherheitsmerkmalen verwendet werden. Wird beispielsweise der Filter 24 als blaue Gitterstruktur ausgeführt und nach Bestrahlung des zweiten Sicherheitsmerkmals 7 von der Oberseite her über das zweite Sicherheitsmerkmal 7 gelegt, und erneut die Oberseite des Wertdokuments 1 bestrahlt, so erhält man ein Violett/Gelb-Grünes-Gittermuster. Analog kann der einfache Steg 22 in der durchgehenden Öffnung 21 durch irgendeine lichtabschirmende Beschichtung, beispielsweise einen lichtundurchlässigen Aufdruck oder eine Metallisierung auf der zweiten Deckschicht 4, bevorzugt in Musterform, ersetzt werden. Wird Licht durch das Muster hindurchgestrahlt, findet die Umwandlung des B-Zustands in dem M-Zustand wiederum nur in den einer Bestrahlung zugänglichen Bereichen statt. Gemäß einer besonderen Ausführungsform können lichtundurchlässige Aufdrucke bzw. Stege in durchgehenden Öffnungen auch in erhabener Form ausgebildet werden, so dass sie beispielsweise von Blinden tastbare Symbole bilden. Ein Sehender kann zusätzlich zwischen den tastbaren Elementen der Symbole Farbwechsel des photochromen Sicherheitsmerkmals beobachten.

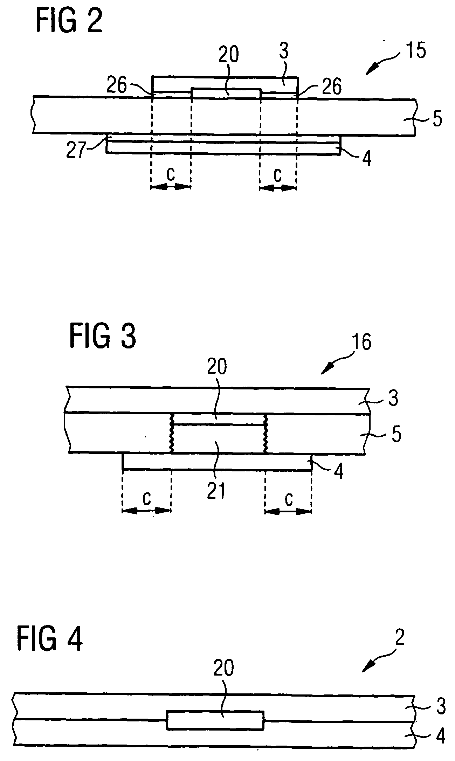

Fig. 2 ist eine Darstellung wie in Fig.1B. Das in Fig. 2 dargestellte Sicherheitsmerkmal eines Wertdokuments 15 besteht wiederum aus einem aufgedruckten Euro-Symbol 20, aber die erste Deckschicht 3 und die zweite Deckschicht 4 bedecken die Kernschicht 5 nicht vollflächig, sondern jeweils nur teilflächig. Wesentlich ist, dass die photochrome Druckschicht 20 vollständig eingeschlossen und von der Umgebung abgeschlossen ist. In Fig. 2 wird dies durch die Verklebungsbereiche c der Kernschicht 5 mit der ersten Deckschicht 3 dargestellt. Dargestellt ist neben der ersten Klebstoffschicht 26 zur Verklebung von Kernschicht 5 und erster Deckschicht 3 auch die Verklebungsschicht 27 zwischen Kernschicht 5 und zweiter Deckschicht 4. Die Klebstoffschichten sind in den übrigen Figuren nicht dargestellt, aber die Sicherheitsmerkmale in analoger Weise eingeschlossen.

Fig. 3 zeigt ein Sicherheitsmerkmal eines Wertdokuments 16 im Schnitt. Dieses Sicherheitsmerkmal ist ähnlich dem zweiten Sicherheitsmerkmal 7 der Figuren 1A und 1C. Hier ist jedoch der photochrome Aufdruck 20 vollständig in der durchgehenden Öffnung 21 angeordnet. Die vollständige Anordnung eines Sicherheitsmerkmals, oder zumindest einiger Schichten eines Sicherheitsmerkmals, in einer durchgehenden Öffnung einer Wertdokument-Kemschicht ist insbesondere für dickere Sicherheitsmerkmale die besonders bevorzugte Ausführungsform. In Fig. 3 ist außerdem die zweite Deckschicht 4 nicht vollflächig ausgebildet, sondern bedeckt eine Oberfläche der Kernschicht 5 nur teilflächig. Wesentlich ist jedoch, dass der photochrome Aufdruck 20 mit BR vollständig zwischen der Kernschicht 5, der ersten Deckschicht 3 und der zweiten Deckschicht 4 eingeschlossen ist. Die mit c bezeichneten Verklebungsbereiche zwischen Kernschicht 5 und zweiter Deckschicht 4 gewährleisten eine fälschungssichere und vor Umwelteinflüssen geschützte Unterbringung des Bacteriorhodopsins.

Fig. 4 zeigt einen Schnitt durch eine alternative Ausführungsform eines erfindungsgemäßen Wertdokuments 2. Das Wertdokument 2 besteht ausschließlich aus Schichten aus Kunststofffolie, beispielsweise aus den gleichen Schichten 3,4, die bei den vorangegangenen Ausführungsformen die Deckschichten bilden. Die erste Folienschicht 3 oder die zweite Folienschicht 4 ist mit einem photochromen Aufdruck 20, der Bacteriorhodopsin enthält, ausgestattet. Der Aufdruck 20 ist fälschungssicher und vor Umwelteinflüssen geschützt zwischen den beiden miteinander laminierten oder miteinander verklebten Folien 3, 4 eingeschlossen.

Die Figuren 5 bis 7 zeigen erfindungsgemäße Wertdokumente mit Kombinations-Sicherheitsmerkmalen, die Bacteriorhodopsin, Fixfarbe und lichtabschirmende Elemente enthalten. Fixfarbe wirkt ebenfalls lichtabschirmend. Die Figuren 5A, 6A, und 7A zeigen jeweils Aufsichten auf eine Oberseite (Deckfolie 3) der Wertdokumente, wobei die Darstellung in der Mitte jeweils das von einem Betrachter wahrgenommene Bild ohne Bestrahlung zeigt, die Darstellung links jeweils das von einem Betrachter wahrgenommene Bild nach Bestrahlung der Oberseite (Bestrahlungsrichtung X) des Wertdokuments zeigt, und die Darstellung rechts jeweils das von einem Betrachter wahrgenommene Bild nach Bestrahlung des Wertdokuments von der Unterseite her (Deckfolie 4, Bestrahlungsrichtung Y) zeigt.

Die Figuren 5B, 6B, und 7B zeigen jeweils einen Schnitt durch einen Teilbereich der Wertdokumente entlang der Linie D-D' (den Bereich mit dem Durchmesser d). Wie aus den Figuren 5B, 6B, und 7B ersichtlich ist, bestehen die Wertdokumente 10,11,12 jeweils aus einer ersten Kunststofffolie 3 und einer zweiten Kunststofffolie 4, zwischen denen das Sicherheitsmerkmal eingeschlossen ist. Der Bereich mit dem Durchmesser d ist der "Sicherheitsmerkmal-Bereich". Die Wertdokumente 10,11,12 haben mindestens den Durchmesser e. Da der Durchmesser des Sicherheitsmerkmal-Bereichs jeweils kleiner ist als der Durchmesser e, verbleibt ein Randbereich 30, der den Sicherheitsmerkmal-Bereich umgibt und an dem die Folienschichten 3, 4 miteinander verklebt oder miteinander laminiert werden, so dass das Sicherheitsmerkmal fälschungssicher und vor Umwelteinflüssen geschützt zwischen den Folien 3, 4 untergebracht ist.

Bei den Wertdokumente 10,11,12 kann es sich beispielsweise um Folienpatches handeln, die mittels der Bereiche 30 über eine durchgehende Öffnung eines Wertdokuments geklebt werden können. Alternativ können die Folien 3,4 jedoch auch wesentlich größere Abmessungen haben, beispielsweise geeignete Abmessungen, um eine Polymerbanknote zu bilden. Gemäß einer weiteren Ausführungsform kann eine der Folien 3, 4 geeignete Abmessungen haben, um in eine durchgehende Öffnung eines Wertdokuments zu passen, beispielsweise die Abmessungen d des Sicherheitsmerkmal-Bereichs, während die andere Folie die Abmessungen e hat und mit ihrem Randbereich 30 mit der Kernschicht 5 eines Wertdokuments verklebt wird, oder geeignete Abmessungen hat, um die Kernschicht 5 eines Wertdokuments vollflächig zu bedecken. Wenn eine der Folien 3, 4 Abmessungen hat, die nicht ausreichend sind, um das BR vollständig einzuschließen, muss die durchgehende Öffnung durch eine zusätzliche Folie verschlossen werden.

Das in Fig. 5 gezeigte Wertdokument 10 hat einen Sicherheitsmerkmal-Bereich d, der strukturiert ist wie in Fig. 5B gezeigt. Eine nicht photochrome violette Farbe (Fixfarbe) 32 ist gemeinsam mit einer Bacteriorhodopsin-Farbe 31 und einer lichtabschirmenden Metalleffektfarbe 33 verdruckt. Anstelle der Metalleffektfarbe kann auch irgendein anderer lichtabschirmender Aufdruck oder eine Metallisierung vorgesehen sein. In Fig. 5 haben der BR-Aufdruck und der Fixfarbe-Aufdruck jeweils eine runde Form, während der Metalleffektfarbe-Aufdruck eine dreieckige Form aufweist. Natürlich sind auch beliebige andere Formen möglich. Die BR-Druckfarbe und die Fixfarbe sind nebeneinander aufgedruckt, während die Metalleffektfarbe und die BR-Druckfarbe übereinander aufgedruckt sind, wie in Fig. 5B gezeigt. Das unbestrahlte Wertdokument 10 bietet einem Betrachter, der die Oberseite des Wertdokuments betrachtet (Deckfolie 3, Richtung X), das in Fig. 5A mittig dargestellte Bild. Er sieht eine einheitlich violette Kreisfläche (in Fig. 5A schraffiert dargestellt). Wird die Oberseite des Wertdokuments mit Licht einer Wellenlänge von etwa 570 nm bestrahlt, sieht der Betrachter das in Fig. 5A links dargestellte Bild. Die violette Fixfarbe 32 ist natürlich nach wie vor violett, während der übrige Sicherheitsmerkmal-Bereich gelb-grün erscheint. Wird das Wertdokument 10 jedoch an seiner Unterseite (Deckfolie 4, Bestrahlungsrichtung Y) mit Licht einer Wellenlänge von etwa 570 nm bestrahlt, so bleibt auch der von der Metalleffektfarbe 33 abgeschirmte Bereich der BR-Druckfarbe violett, und ein Betrachter, der die Oberseite des Wertdokuments 10 betrachtet, sieht das in Fig. 5A rechts dargestellte Bild: innerhalb eines gelb-grünen Kreises befinden sich ein violetter Kreis und ein violettes Dreieck.

Nach einigen Minuten stellt sich der Ausgangszustand wieder ein, d.h. der gesamte Sicherheitsmerkmal-Bereich (Kreis mit Durchmesser d) erscheint wieder violett, da das Bacteriorhodopsin aus dem M-Zustand in den B-Zustand zurückkehrt. Die Rückkehr kann durch Einstrahlen von Licht mit einer Wellenlänge von etwa 410 nm beschleunigt werden, beispielsweise indem mit derselben Lichtquelle bestrahlt wird, wie bei der Umwandlung des B-Zustands in den M-Zustand, jedoch durch einen blauen Filter hindurch.

Das in Fig. 6 dargestellte Wertdokument 11 unterscheidet sich von dem Wertdokument 10 durch den Aufbau des Sicherheitsmerkmal-Bereichs d. Bei dem Wertdokument 11 besteht dieser Bereich aus einem Aufdruck aus Metalleffektfarbe 33 auf einer Oberfläche der Kunststofffolie 4, einem darauf aufgebrachten Aufdruck aus violetter Fixfarbe 32, und einem Aufdruck aus BR-Druckfarbe 31, der die Zwischenräume füllt, wie in Fig. 6B dargestellt. Diese Anordnung wird bedeckt von der Kunststofffolie 3.

Ohne Bestrahlung sieht ein Betrachter, der das Wertdokument 11 von oben betrachtet, einen violetten Kreis (violette Fixfarbe plus BR im B-Zustand), also das gleiche Bild wie bei dem Wertdokument 10. Bei Bestrahlung der Oberseite des Wertdokuments 11 mit Licht der Wellenlänge 570 nm geht das Bacteriorhodopsin in den M-Zustand über, wird also gelb-grün, während die Fixfarbe violett bleibt. Ein Betrachter, der das Wertdokument 11 von oben betrachtet, sieht dann das in Fig. 6A links dargestellte Bild, nämlich einen gelben Kreis mit zwei violetten Rechtecken aus Fixfarbe 32. Wird das Wertdokument 11 dagegen von der Unterseite her mit Licht einer Wellenlänge von 570 nm bestrahlt, schirmt der Aufdruck aus Metalleffektfarbe 33 einen großen Teil der BR-Druckfarbe ab, und alle abgeschirmten Bereiche behalten ihre violette Farbe, während die übrigen Bereiche gelb-grün werden. Ein Betrachter, der das Wertdokument 11 von oben betrachtet, sieht dann das in Fig. 6A rechts dargestellte Bild, nämlich einen gelb-grünen kreisförmigen Bereich mit violetten Rechtecken, die die Form des Aufdrucks aus Metalleffektfarbe 33 wiedergeben.

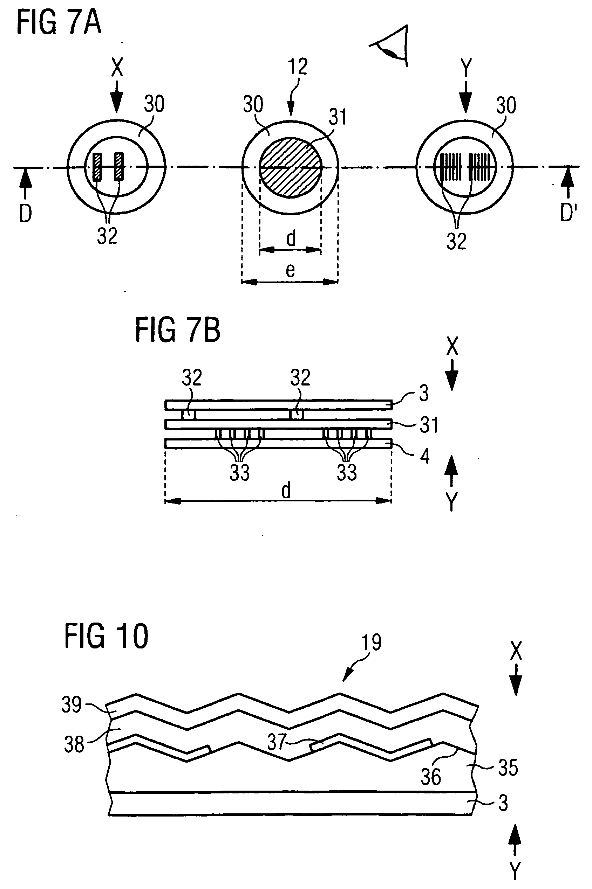

Das in Fig. 7 dargestellte Wertdokument 12 ist, abgesehen vom Aufbau des Sicherheitsmerkmal-Bereichs d, identisch mit den Wertdokumenten 10, 11. Der Aufbau des Sicherheitsmerkmal-Bereichs des Wertdokuments 12 ist in Fig. 7B dargestellt. Der Sicherheitsmerkmal-Bereich besteht in diesem Fall aus strichförmigen Aufdrucken aus Metalleffektfarbe 33 auf einer Oberfläche der Folie 4, einem darüber vollflächig aufgetragenen Aufdruck aus BR-Druckfarbe 31, und einem darauf aufgetragenen Aufdruck aus violetter Fixfarbe 32. Der Aufdruck der Fixfarbe 32 ist ebenfalls strichförmig, wobei die Striche breiter sind als bei der Metalleffektfarbe 33. Abgedeckt wird die kombinierte Druckschicht von der Deckfolie 3.

Im Ausgangszustand sieht ein Betrachter, der das Wertdokument 12 von oben betrachtet, wiederum das gleiche Bild wie bei den Wertdokumenten 10 und 11, nämlich einen violetten Kreis (in Fig. 7A schraffiert dargestellt). Bei Bestrahlung von oben (Bestrahlungsrichtung X) mit Licht einer Wellenlänge von etwa 570 nm geht das dem Licht ausgesetzte BR in den M-Zustand über, während die Fixfarbe ihre violette Farbe beibehält. Ein Betrachter, der das Wertdokument 12 von oben betrachtet, sieht dann das in Fig. 7A links dargestellte Bild, nämlich einen gelb-grünen Kreis mit zwei violetten Balken aus Fixfarbe 32. Bei Bestrahlung des Wertdokuments 12 von unten (Bestrahlungsrichtung Y) bleiben alle Bereiche der BR-Druckfarbe, die durch den Druck aus Metalleffektfarbe 33 gegen Bestrahlung abgeschirmt sind, violett, während die übrigen Bereiche eine gelb-grüne Farbe annehmen, außer den Fixfarbe-Bereichen natürlich. Ein Betrachter, der das Wertdokument 12 von oben her betrachtet, sieht dann das in Fig. 7A rechts dargestellte Bild, nämlich einen gelben Kreis mit breiten violetten Balken und schmalen violetten Strichen. Auch bei dieser Ausführungsform ergänzen sich also, wie bei der Ausführungsform des Wertdokuments 10, die Druckbilder aus Fixfarbe 32 und aus Metalleffektfarbe 33 (bzw. die durch die Metalleffektfarbe 33 abgeschirmten Bereiche der BR-Druckfarbe 31) zu einem gemeinsamen Druckbild, wenn das Wertdokument von unten her bestrahlt wird.

Durch geeignete Kombinationen von photochromer Druckfarbe mit Aufdrucken aus nicht-photochromer Farbe und anderen lichtabschirmenden Aufdrucken können beliebige Muster erzeugt werden, die im Ausgangszustand nicht erkennbar sind (bei Farbgleichheit der Fixfarbe und des Ausgangszustands der photochromen Farbe), bei Bestrahlung von der einen Seite her teilweise sichtbar werden, und bei Bestrahlung von der anderen Seite her vollständig sichtbar werden. Um das unterschiedliche Verhalten bei Bestrahlung rasch hintereinander prüfen zu können, ohne die thermische Relaxation der photochromen Farbe in den Ausgangszustand abwarten zu müssen, können Sicherheitsmerkmale, wie sie in den Figuren 5, 6 und 7 dargestellt sind, vorteilhaft mit einem Verifikationselement 8 (Fig.1A, Fig. 1B) kombiniert werden. Wird eine photochrome Farbe verwendet, die einen farbigen und einen farblosen Zustand besitzt, können mit dieser Farbe überschichtete Strukturen durch geeignete Bestrahlung sichtbar gemacht werden.

In den Figuren 5, 6 und 7 ist die photochrome Druckfarbe 31 jeweils so aufgetragen, dass der gesamte Sicherheitsmerkmal-Bereich d bedruckt ist. Selbstverständlich können jedoch auch unbedruckte Bereiche frei bleiben, so dass das Wertdokument auch einen vollständig transparenten Bereich aufweist, oder es können zusätzlich weitere Aufdrucke vorgesehen werden, beispielsweise Aufdrucke mit Fluoreszenzfarben oder mit farbkippenden Pigmenten.

Die Figuren 8 und 9 zeigen mikrooptische Darstellungsanordnungen bzw. ein Wertdokument 13 mit einer mikrooptischen Darstellungsanordnung. Mikrooptische Darstellungsanordnungen sind insbesondere mikrooptische Vergrößerungsanordnungen wie Moiré-Vergrößerungsanordnungen und Modulo-Vergrößerungsanordnungen, wie sie in den Druckschriften DE 10 2005 062132 A1, WO 2007/076952 A2, DE 10 2007 029 203, PCT/EP2008/005173, PCT/EP2008/005171 und PCT/EP2008/005172 beschrieben sind, deren diesbezüglicher Offenbarungsgehalt hiermit durch Bezugnahme aufgenommen wird. Alle diese mikrooptischen Vergrößerungsanordnungen enthalten ein Motivbild mit Mikrostrukturen, das bei Betrachtung mit einem geeignet abgestimmten Betrachtungsraster ein vorgegebenes Sollbild rekonstruiert. Wie in den oben genannten Druckschriften genauer erläutert, lassen sich dabei eine Vielzahl visuell attraktiver Vergrößerungsund Bewegungseffekte erzeugen, die zu einem hohen Wiedererkennungswert und einer hohen Fälschungssicherheit der damit ausgestatteten Wertdokumente führen. Als Betrachtungseinrichtungen dienen Mikrolinsenanordnungen und andere Mikrofokussierelement-Anordnungen, wie beispielsweise Anordnungen von Mikrohohlspiegeln.

Die Herstellung der Mikrolinsen und der Mikrostrukturen kann beispielsweise mit Hilfe klassischer Techniken der Halbleitertechnologie (Photolithographie, Elektronenstrahllithographie) erfolgen. Dabei werden geeignete Strukturen in Resistmaterialien belichtet, eventuell veredelt, galvanisch abgeformt und zur Fertigung von Prägewerkzeugen für die Folienprägung verwendet. Besonders geeignet zur Herstellung großer Flächen sind die bekannten Verfahren zur Prägung in thermoplastische Folien oder in mit strahlungshärtenden Lacken beschichtete Folien. Alternativ sind auch Techniken bekannt, Mikrolinsen-Anordnungen durch Inkjet-Druckverfahren oder durch Selbstorganisationsprozesse von Mikropartikeln auf Oberflächen aufzubringen.

Bei der vorliegenden Erfindung ist es besonders bevorzugt, die Mikrostruktur durch ein Mikrotiefdruckverfahren aufzubringen, wie es in der Druckschrift WO 2008/000350 offenbart ist. Nach diesem Verfahren können Mikrostrukturen und/oder Mikrolinsen auf einen Träger aufgebracht werden. Es wird eine Werkzeugform verwendet, deren Oberfläche eine Anordnung von Erhebungen und Vertiefungen in Gestalt der gewünschten Mikrostruktur oder der gewünschten Mikrolinsen aufweist, die Vertiefungen der Werkzeugform mit einem härtbaren, farbigen oder farblosen Prägelack befüllt, der Träger für eine gute Verankerung des farbigen oder farblosen Lacks vorbehandelt, die Oberfläche der Werkzeugform mit dem Träger in Kontakt gebracht, der in Kontakt mit dem Träger stehende Lack in Vertiefungen der Werkzeugform gehärtet und dabei mit dem Träger verbunden, und die Oberfläche der Werkzeugform wieder von dem Träger entfernt, so dass der mit dem Träger verbundene, gehärtete Prägelack aus den Vertiefungen der Werkzeugform gezogen wird.

Das in Fig. 8A im Schnitt dargestellte Sicherheitsmerkmal ist eine mikrooptische Darstellungsanordnung 17, die eine transparente Trägerfolie 3, beispielsweise eine PET-Folie, und eine rasterförmige Anordnung von Mikrolinsen 40 auf einer Oberfläche der transparenten Trägerfolie aufweist. Auf der Unterseite der Trägerfolie 3 ist eine Motivschicht 42 angeordnet, die eine rasterförmige Anordnung von identischen Mikromotivelementen 43 enthält. Die Gitteranordnungen der Mikrolinsen 40 und der Mikromotivelemente 43 unterscheiden sich geringfügig hinsichtlich ihrer Symmetrie und/oder der Größe der Gitterparameter, um den gewünschten Moiré-Vergrößerungseffekt zu erzeugen. Die Stützschicht 41 besteht aus transparentem, UV-härtendem Lack, und ist nur erforderlich, wenn zur Herstellung der Mikromotivelemente 43 das in WO 2008/000350 offenbarte Mikrotiefdruckverfahren verwendet wird.

Bei den erfindungsgemäßen Wertdokumenten bestehen die Mikromotivelemente 43 aus Materialien, die photochrome Effekte aufweisen. Wenn die Mikromotivelemente 43 nach dem in WO 2008/000350 offenbarten Mikrotiefdruckverfahren hergestellt werden, werden die photochromen Farbstoffe, beispielsweise BR, in einen UV-härtbaren farblosen Lack eingemischt, der Lack wie oben beschrieben in Vertiefungen einer geeigneten Werkzeugform gefüllt, mit der Stützschicht 41 in Kontakt gebracht und gehärtet. Nach dem Entfernen der Werkzeugform verbleiben die Mikromotivelemente 43 in Form gehärteter Lackelemente, die aufgrund ihres Gehalts an BR photochrom sind, auf dem Träger 3. Mit dem Verfahren lassen sich sehr hohe Schichtdicken übertragen und daher sehr gute Kontraste erzielen. Auch feinste Mikrostrukturen können mit höchster Auflösung erzeugt werden.

Zur Gewährleistung einer guten Abbildung müssen sich die Mikromotivelemente 43 in der Brennebene der Mikrolinsen 40 befinden, was zwangsweise eine gewisse Mindestdicke mikrooptischer Darstellungsanordnungen zur Folge hat. Besonders dick werden diese Anordnungen, wenn sie nicht nur einseitig, wie in Fig. 8A gezeigt, sondern beidseitig mit Mikrofokussierelementen ausgestattet sind. Derartige Sicherheitsmerkmale sind nur sehr schwierig in dünne Wertdokumente wie Banknoten zu integrieren und werden bei der vorliegenden Erfindung daher bevorzugt in einer durchgehenden Öffnung einer Kernschicht des Wertdokuments angeordnet. Dabei kann beispielsweise die Trägerfolie 3 mit den Mikrolinsen 40 eine Deckfolie des Wertdokuments bilden, wobei sich die übrigen Bestandteile der mikrooptischen Darstellungsanordnung 17, die Stützschicht 41 und die Motivschicht 42, innerhalb der durchgehenden Öffnung befinden. Die Deckfolie 3 wird dann natürlich nur im Bereich der durchgehenden Öffnung mit Mikrolinsen 40 und einer Mikromotivschicht 42 ausgestattet. Bei der in Fig. 8A gezeigten Ausführungsform ist außerdem eine Klebstoffschicht 44 vorgesehen, mit deren Hilfe die mikrooptische Darstellungsanordnung 17 alternativ auch an einer Oberfläche eines Wertdokuments befestigt werden kann oder mit deren Hilfe an der mikrooptischen Darstellungsanordnung weitere Funktionsschichten befestigt werden können, was die Dicke der Anordnung weiter erhöht und die Unterbringung in einer durchgehenden Öffnung noch vorteilhafter werden lässt.

Bei mikrooptischen Darstellungsanordnungen, die beidseitig mit Mikrofokussierelementen ausgestattet sind, können diese Mikrofokussierelemente beispielsweise in beide Deckfolien 3, 4 eines Wertdokuments mit einer Kernschicht 5 und einer durchgehenden Öffnung in der Kernschicht 5 eingeprägt werden, während alle übrigen Schichten der optischen Darstellungsanordnung in der durchgehenden Öffnung der Kernschicht 5 angeordnet sind.

Fig. 8B zeigt ein Wertdokument 13 mit einer mikrooptischen Darstellungsanordnung gemäß Fig. 8A, wobei zur besseren Erkennbarkeit die Mikrolinsenanordnung und die Mikromotivanordnung getrennt dargestellt sind. Das Wertdokument 13 besteht aus der Kunststofffolie 3, in die die Mikrolinsen 40 eingeprägt sind, und der Kunststofffolie 4 mit den Mikromotivelementen 43. Die Mikromotivelemente 43 sind zur Illustration nur als einfache Buchstaben "A" dargestellt, können jedoch beliebige Formen haben, auch sehr komplexe und feinstrukturierte Formen. Das Wertdokument 13 kann beispielsweise als ein Etikett verwendet werden, oder die Folien 3, 4 können größer ausgebildet werden, d.h. sich über den eigentlichen Sicherheitsmerkmal-Bereich hinaus erstrecken, so dass die mikrooptische Darstellungsanordnung nur einen geringen Teil des Wertdokuments einnimmt, oder eine der Folien (beispielsweise die Folie 3) kann ausreichend groß ausgebildet werden, um mit dem Randbereich einer durchgehenden Öffnung einer Wertdokument-Kernschicht verklebt zu werden, während die Folie 4 passende Abmessungen hat, um in der durchgehenden Öffnung der Kernschicht Platz zu finden, etc.

Gemäß der einfachsten Ausführungsform sind die Mikromotivelemente 43 alle identisch. Sie können jedoch auch verschiedenfarbig oder mit Mischfarben hergestellt werden, so dass mehrfarbige Motivbilder sowie Motivbilder mit Farbverläufen, Farbkippeffekten oder Farbkontrastvariationen erzeugt werden, wie es in WO 2008/000350 beschrieben ist. Auch Ausführungsformen, bei denen ein Teil der Mikromotivelemente 43 photochrome Farben aufweist, während ein anderer Teil nicht-photochrome Farben aufweist, sind natürlich möglich.

Ebenso können die mikrooptischen Darstellungsanordnungen mit weiteren Funktionsschichten kombiniert werden. Ein Beispiel dafür ist in Fig. 9 dargestellt. Fig. 9 zeigt einen Schnitt durch ein mikrooptisches Sicherheitsmerkmal, wie es in Fig. 8A dargestellt ist, mit in eine Kunststofffolie 3 eingeprägten Mikrolinsen 40 und Mikromotivelementen 43, die mittels einer Schicht 41 aus transparentem, UV-härtendem Lack mit der Folie 3 verbunden sind. Als zusätzliche Funktionsschicht weist das Sicherheitsmerkmal 18 eine metallische oder eine farbkippende Beschichtung 45 auf, die Negativbildelemente in Form nicht beschichteter Teilbereiche 47 enthält. Solche Beschichtungen mit Aussparungen können mittels eines Waschverfahrens erzeugt werden, wie es beispielsweise aus WO 99/13157 A1 bekannt ist. Eine präzise Durchführung eines derartigen Verfahrens erfordert eine einigermaßen ebene Oberfläche, weshalb bei der dargestellten Ausführungsform eine transparente Lackschicht 46 vorgesehen ist, die die durch die Mikromotivelemente 43 bedingte Oberflächen-Unebenheit ausgleicht.

Fig.10 zeigt eine weitere Ausführungsform eines Sicherheitsmerkmals für ein erfindungsgemäßes Wertdokument im Schnitt. Das in Fig. 10 dargestellte Sicherheitsmerkmal 19 weist eine transparente Folie 3 und eine darauf aufgetragene Prägelackschicht 35 auf, in die eine Beugungsstruktur 36, beispielsweise ein Hologramm, eingeprägt ist. Darauf befindet sich eine Metallisierung 37, wobei die Metallisierung 37 nur Teilbereiche der Beugungsstruktur 36 bedeckt, also Negativbildelemente aufweist (analog der Schicht 45 in Fig. 9). Das teilweise metallisierte Hologramm ist mit einer photochromen Schicht 38 beschichtet, beispielsweise bedruckt, und diese photochrome Beschichtung kann mittels der Klebstoffschicht 39 mit weiteren funktionellen Schichten oder mit einem Wertdokument verbunden werden. Im folgenden soll der Fall betrachtet werden, dass die photochrome Beschichtung 38 eine photochrome Substanz aufweist, die einen farblosen und einen farbigen Zustand besitzt, die reversibel ineinander umgeschaltet werden können, und dass das Sicherheitsmerkmal 19 über einer durchgehenden Öffnung eines Wertdokuments angebracht ist.

Wird das Sicherheitsmerkmal 19 aus der Betrachtungsrichtung X betrachtet, während sich die photochrome Substanz im farbigen Zustand befindet, sieht der Betrachter eine farbige Hologrammstruktur 36. Wird das Sicherheitselement aus der Richtung X mit Licht einer geeigneten Wellenlänge bestrahlt, so dass die photochrome Substanz in den farblosen Zustand geschaltet wird, ist die Hologrammstruktur 36 nur noch in den Bereichen der Metallisierung 37 in der Farbe der Metallisierung zu erkennen. In den Bereichen ohne Metallisierung ist das Sicherheitsmerkmal 19 nun transparent. Wird das Sicherheitsmerkmal 19 hingegen aus der Richtung Y bestrahlt und die photochrome Substanz dadurch in den farblosen Zustand umgeschaltet, so erkennt der Betrachter aus der Betrachtungsrichtung X die Hologrammstruktur 36 in den Bereichen der Metallisierung 37 nach wie vor in der Farbe der photochromen Substanz, da diese durch die Metallisierung 37 abgeschirmt wurde. In den Bereichen ohne Metallisierung ist das Sicherheitsmerkmal 19 transparent und die Hologrammstruktur 36 nicht mehr erkennbar.

Bei allen Wertdokumenten, die mit einer photochromen Substanz ausgestattet werden, die durch Belichtung in einen Zustand geschaltet werden kann, der erst im Verlaufe mehrerer Minuten oder Stunden oder nach noch längerer Zeit durch thermische Relaxation in den Ausgangszustand zurückkehrt, aber durch Bestrahlung mit Licht einer anderen Wellenlänge beschleunigt in den Ausgangszustand zurückgeschaltet werden kann, bietet es sich an, das Wertdokument gleichzeitig mit einem "Rückschaltelement" auszustatten. Ein derartiges Rückschaltelement kann beispielsweise eine Folie sein, die das für die erste Umschaltung verwendete Licht in die für die zweite Umschaltung benötigte Wellenlänge umwandelt, bzw. unbrauchbare Wellenlängen herausfiltert. Ein Beispiel ist die im Zusammenhang mit Fig. 1 erläuterte blaue Färbung 24.

## Patentansprüche

1. Wertdokument-Substrat zur Herstellung von Wertdokumenten (1, 2), insbesondere von Banknoten, mit mindestens einem photochromen Sicherheitsmerkmal (6, 7, 17, 18, 19), **dadurch gekennzeichnet, dass**
- das Wertdokument-Substrat eine Kernschicht (5) und eine erste (3) und eine zweite (4) Deckschicht aufweist, wobei
- die Kernschicht (5) mindestens eine durchgehende Öffnung (21) aufweist,
- die erste (3) und die zweite (4) Deckschicht transparente oder transluzente Folienschichten sind,
- die erste Deckschicht (3) eine erste Oberfläche der Kernschicht (5) vollflächig oder teilflächig bedeckt,
- die zweite Deckschicht (4) eine zweite Oberfläche der Kernschicht (5) vollflächig oder teilflächig bedeckt, und
- die erste (3) und die zweite (4) Deckschicht die durchgehende Öffnung (21) in der Kernschicht (5) vollständig verschließen, und
- das mindestens eine photochrome Sicherheitsmerkmal mindestens teilweise, und bevorzugt vollständig, in der durchgehenden Öffnung (21) der Kernschicht (5) angeordnet ist und zwischen der Kernschicht (5), der ersten Deckschicht (3) und der zweiten Deckschicht (4) eingeschlossen ist.

2. Wertdokument-Substrat nach Anspruch 1, **dadurch gekennzeichnet, dass** das photochrome Sicherheitsmerkmal mindestens einen von einem phototrophen Organismus gebildeten photochromen Farbstoff oder eine Variante davon aufweist.

3. Wertdokument-Substrat nach Anspruch 2, **dadurch gekennzeichnet, dass** der photochrome Farbstoff einen retinalbasierten Farbstoff, bevorzugt ein Rhodopsin, aufweist.

4. Wertdokument-Substrat nach Anspruch 3, **dadurch gekennzeichnet, dass** das Rhodopsin ein Bacteriorhodopsin oder ein Proteorhodopsin aufweist.

5. Wertdokument-Substrat nach Anspruch 4, **dadurch gekennzeichnet, dass** das Bacteriorhodopsin ausgewählt ist aus der Gruppe, die besteht aus Bacteriorhodopsin vom Wildtyp, D96N, D85N, D36C, und Gemischen davon.

6. Wertdokument-Substrat nach einem der Ansprüche 1 bis 5, **dadurch gekennzeichnet, dass** das photochrome Sicherheitsmerkmal ein Kombinationsmerkmal ist, das mindestens einen Bereich mit einem photochromen Farbstoff (31) und mindestens einem Bereich ohne photochromen Farbstoff (32, 33) aufweist, wobei der mindestens eine Bereich mit photochromem Farbstoff und der mindestens eine Bereich ohne photochromen Farbstoff nebeneinander und/oder übereinander angeordnet sind.

7. Wertdokument-Substrat nach Anspruch 6, **dadurch gekennzeichnet, dass** mindestens ein Bereich ohne photochromen Farbstoff ein Bereich mit einem nicht-photochromen Farbstoff (32) ist, der bevorzugt dieselbe Farbe wie einer der reversibel ineinander umschaltbaren Zustände des photochromen Farbstoffs hat.

8. Wertdokument-Substrat nach Anspruch 6 oder 7, **dadurch gekennzeichnet, dass** mindestens ein Bereich ohne photochromen Farbstoff ein Bereich (33) ist, der in der Lage ist, Bestrahlungslicht zum Umschalten der reversibel ineinander umschaltbaren Zustände des photochromen Farbstoffs abzuschirmen, bevorzugt eine Metallisierung, eine eine Metalleffektfarbe aufweisende Beschichtung oder eine farbkippende Beschichtung.

9. Wertdokument-Substrat nach einem der Ansprüche 6 bis 8, **dadurch gekennzeichnet, dass** die Bereiche (31, 32, 33) des Kombinationsmerkmals ein geometrisches oder figürliches Muster oder einen Code bilden.

10. Wertdokument-Substrat nach Anspruch 1, **dadurch gekennzeichnet, dass** das photochrome Sicherheitsmerkmal eine mikrooptische Darstellungsanordnung (17,18) ist, bevorzugt eine Moire- oder eine Modulo-Vergrößerungsanordnung, die Mikrofokussierelemente (40) und Mikromotivelemente (43) aufweist, wobei die Mikromotivelemente mindestens einen photochromen Farbstoff enthalten.

11. Wertdokument-Substrat nach einem der Ansprüche 1 bis 5, **dadurch gekennzeichnet, dass** das photochrome Sicherheitsmerkmal mindestens einen Bereich (38) mit einem photochromen Farbstoff und mindestens einen Bereich (36) mit einer diffraktiven oder einer refraktiven Struktur, bevorzugt einer Hologrammstruktur, die nebeneinander und/ oder übereinander angeordnet sind, aufweist.

12. Wertdokument (1, 2), insbesondere Banknote, **dadurch gekennzeichnet, dass** es ein Wertdokument-Substrat nach einem der Ansprüche 1 bis 11 aufweist.

13. Wertdokument nach Anspruch 12, **dadurch gekennzeichnet, dass** es eine Hybrid-Banknote ist.

14. Wertdokument nach Anspruch 12 oder 13, **dadurch gekennzeichnet, dass** es ein Rückschaltelement aufweist.

## Claims

1. A value document substrate for manufacturing value documents (1, 2), in particular banknotes, with at least one photochromic security feature (6, 7, 17, 18, 19), **characterized in that**
- the value document substrate has a core layer (5) and a first (3) and a second (4) cover layer, wherein
- the core layer (5) has at least one through opening (21),
- the first (3) and the second (4) cover layer are transparent or translucent foil layers,
- the first cover layer (3) covers a first surface of the core layer (5) over the full or a partial area,
- the second cover layer (4) covers a second surface of the core layer (5) over the full or a partial area, and
- the first (3) and the second (4) cover layer close the through opening (21) in the core layer (5) completely, and
- the at least one photochromic security feature is arranged at least partially, and preferably completely, in the through opening (21) of the core layer (5) and is enclosed between the core layer (5), the first cover layer (3) and the second cover layer (4).

2. The value document substrate according to claim 1, **characterized in that** the photochromic security feature has at least one photochromic dye formed by a phototropic organism or a variant thereof.

3. The value document substrate according to claim 2, **characterized in that** the photochromic dye has a retinal-based dye, preferably a rhodopsin.

4. The value document substrate according to claim 3, **characterized in that** the rhodopsin has a bacteriorhodopsin or a proteorhodopsin.

5. The value document substrate according to claim 4, **characterized in that** the bacteriorhodopsin is chosen from the group consisting of bacteriorhodopsin of the wild type, D96N, D85N, D36C, and mixtures thereof.

6. The value document substrate according to any of the claims 1 to 5, **characterized in that** the photochromic security feature is a combination feature having at least one region with a photochromic dye (31) and at least one region without photochromic dye (32, 33), wherein the at least one region with photochromic dye and the at least one region without photochromic dye are arranged next to each other and/or above each other.

7. The value document substrate according to claim 6, **characterized in that** at least one region without photochromic dye is a region with a non-photochromic dye (32) which preferably has the same color as one of the reversibly interswitchable states of the photochromic dye.

8. The value document substrate according to claim 6 or 7, **characterized in that** at least one region without photochromic dye is a region (33) which is capable of shielding from irradiating light for switching the reversibly interswitchable states of the photochromic dye, preferably a metalization, a coating having a metallic effect ink or a color-shifting coating.

9. The value document substrate according to any of the claims 6 to 8, **characterized in that** the regions (31, 32, 33) of the combination feature form a geometrical or figurative pattern or a code.

10. The value document substrate according to claim 1, **characterized in that** the photochromic security feature is a micro-optical representation arrangement (17, 18), preferably a moiré or modulo magnification arrangement having micro-focusing elements (40) and micro-motif elements (43), wherein the micro-motif elements contain at least one photochromic dye.

11. The value document substrate according to any of the claims 1 to 5, **characterized in that** the photochromic security feature has at least one region (38) with a photochromic dye and at least one region (36) with a diffractive or a refractive structure, preferably a hologram structure, which are arranged next to each other and/or above each other.

12. A value document (1,2), in particular a banknote, **characterized in that it** has a value document substrate according to any of the claims 1 to 11.

13. The value document according to claim 12, **characterized in that** it is a hybrid banknote.

14. The value document according to claim 12 or 13, **characterized in that** it has a reset element.

## Revendications

1. Substrat pour documents de valeur, destiné à la fabrication de documents de valeur (1,2), en particulier de billets de banque, comprenant au moins une caractéristique de sécurité (6, 7, 17, 18, 19) photochromique, **caractérisé en ce que**
- le substrat pour documents de valeur comporte une couche noyau (5) et une première (3) et une deuxième (4) couche de recouvrement, cependant que
- la couche noyau (5) comporte au moins une ouverture (21) en continu,
- la première (3) et la deuxième (4) couche de recouvrement sont des couches de film transparentes ou translucides,
- la première couche de recouvrement (3) recouvre une première surface de la couche noyau (5) sur toute ou une partie de sa surface,
- la deuxième couche de recouvrement (4) recouvre une deuxième surface de la couche noyau (5) sur toute ou une partie de sa surface, et
- la première (3) et la deuxième (4) couche de recouvrement bouchent entièrement l'ouverture (21) en continu dans la couche noyau (5), et
- la au moins une caractéristique de sécurité photochromique est agencée au moins partiellement, et de préférence entièrement, dans l'ouverture (21) en continu de la couche noyau (5) et est enclavée entre la couche noyau (5), la première couche derecouvrement(3) et la deuxième couche de recouvrement (4).

2. Substrat pour documents de valeur selon la revendication 1, **caractérisé en ce que** la caractéristique de sécurité photochromique comporte au moins un colorant photochromique généré par un organisme phototrophe, ou une variante une variante dudit colorant.

3. Substrat pour documents de valeur selon la revendication 2, **caractérisé en ce que** le colorant photochromique comporte un colorant à base de rétinal, de préférence une rhodopsine.

4. Substrat pour documents de valeur selon la revendication 3, **caractérisé en ce que** la rhodopsine comporte une bactériorhodopsine ou une protéorhodopsine.

5. Substrat pour documents de valeur selon la revendication 4, **caractérisé en ce que** la bactériorhodopsine est choisie dans le groupe constitué par la bactériorhodopsine de type sauvage, la D96N, la D85N, la D36C, et des mélanges de cela.

6. Substrat pour documents de valeur selon une des revendications de 1 à 5, **caractérisé en ce que** la caractéristique de sécurité photochromique est une caractéristique combinée qui comporte au moins une zone avec un colorant photochromique (31) et au moins une zone sans colorant photochromique (32, 33), cependant que la au moins une zone avec colorant photochromique et la au moins une zone sans colorant photochromique sont agencées de manière juxtaposée et/ou superposée.

7. Substrat pour documents de valeur selon la revendication 6, **caractérisé en ce qu'**au moins une zone sans colorant photochromique est une zone avec un colorant non photochromique (32) qui a de préférence la même couleur qu'un des états réversiblement commutables entre eux du colorant photochromique.

8. Substrat pour documents de valeur selon la revendication 6 ou 7, **caractérisé en ce qu**'au moins une zone sans colorant photochromique est une zone (33) qui est en mesure de faire écran à la lumière radiante pour commuter les états réversiblement commutables entre eux du colorant photochromique, de préférence une métallisation, un revêtement comportant une encre à effet métallique ou un revêtement à basculement des couleurs.

9. Substrat pour documents de valeur selon une des revendications de 6 à 8, **caractérisé en ce que** les zones (31, 32, 33) de la caractéristique combinée constituent un motif géométrique ou figuratif ou un code.

10. Substrat pour documents de valeur selon la revendication 1, **caractérisé en ce que** la caractéristique de sécurité photochromique est un agencement de représentation micro-optique (17, 18), de préférence un agencement de grossissement par effet de Moiré ou modulo qui comporte des éléments de microfocalisation (40) et des éléments de micromotifs (43), les éléments de micromotifs contenant au moins un colorant photochromique.

11. Substrat pour documents de valeur selon une des revendications de 1 à 5, **caractérisé en ce que** la caractéristique de sécurité photochromique comporte au moins une zone (38) ayant un colorant photochromique et au moins une zone (36) ayant une structure diffractive ou une structure réfractive, de préférence une structure d'hologramme, qui sont agencées de manière juxtaposée et/ou superposée.

12. Document de valeur (1, 2), en particulier billet de banque, **caractérisé en ce qu**'il comporte un substrat pour documents de valeur selon une des revendications de 1 à 11.

13. Document de valeur selon la revendication 12, **caractérisé en ce qu**'il est un billet de banque hybride.

14. Document de valeur selon la revendication 12 ou 13, **caractérisé en ce qu**'il comporte un élément de rétrocommutation.
